(19)

**Europäisches Patentamt**
**European Patent Office**
**Office européen des brevets**

(11)  **EP 4 539 319 A1**

(12)  **EUROPEAN PATENT APPLICATION**

(43) Date of publication:
**16.04.2025** Bulletin **2025/16**

(21) Application number: **24205693.5**

(22) Date of filing: **09.10.2024**

(51) International Patent Classification (IPC):
**H02M 1/00** *(2006.01)*  **H02M 3/158** *(2006.01)*
**H02M 7/217** *(2006.01)*

(52) Cooperative Patent Classification (CPC):
**H02M 7/217; H02M 1/0058; H02M 3/158;**
H02M 1/42

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **10.10.2023 US 202318378486**

(71) Applicant: **Rtx Corporation**
**Arlington, VA 22209 (US)**

(72) Inventors:
• LIU, Bo
  Milford, 06460 (US)
• CHANNEGOWDA, Parikshith
  Marlborough, 06447 (US)
• DWARI, Suman
  Acton, 01720 (US)

(74) Representative: **Dehns**
**10 Old Bailey**
**London EC4M 7NG (GB)**

(54)  **ELECTRICAL CONVERTER SYSTEMS**

(57)    An AC/DC converter (100, 200) can include an alternating current (AC) source (102, 202) configured to output AC, one or more AC lines (104a-104b) electrically connected to the AC source to conduct the AC, a conversion circuit (106, 206) operatively electrically connected to the one or more AC lines to receive AC, one or more filter inductors (108, 208a-208c) electrically connected to at least one of the one or more AC lines, and an inductance control system (110, 210) operatively connected to the one or more filter inductors to modify the inductance of the one or more filter inductors. A DC/DC converter (500) can include a direct current (DC) source configured to output DC, one or more DC lines electrically connected to the DC source to conduct the DC, a non-resonant DC/DC conversion circuit operatively electrically connected to the one or more DC lines to receive DC, one or more filter inductors (508, 708) electrically connected to at least one of the one or more DC lines, and an inductance control system (512, 712) operatively connected to the one or more filter inductors to modify the inductance of the one or more filter inductors to maintain a constant switching frequency while maintaining soft switching of the one or more switches independent of variations in the DC and/or a load connected to the non-resonant DC/DC conversion circuit. The non-resonant DC/DC conversion circuit can be configured for DC/DC conversion. The non-resonant DC/DC conversion circuit can include one or more switches configured to be controlled for DC/DC conversion.

**Fig. 1**

EP 4 539 319 A1

## Description

## FIELD

The invention relates to electrical converter systems.

## BACKGROUND

High efficiency operation in AC/DC Power Factor Correction (PFC) rectifiers, DC/AC inverters, and DC/DC can benefit from soft-switching control which is often traditionally achieved by varying switching frequency of the converter. However, traditional methods of varying the switching frequency operation have several disadvantages, for example, including increased electromagnetic interference (EMI), difficulty in paralleling, etc.

Such conventional methods and systems have generally been considered satisfactory for their intended purpose. However, there is still a need in the art for alternate method of achieving soft-switching control. The present disclosure provides a solution for this need.

## SUMMARY

According to a first aspect of the invention, there is provided an AC/DC converter including an alternating current (AC) source configured to output AC, one or more AC lines electrically connected to the AC source to conduct the AC, a conversion circuit operatively electrically connected to the one or more AC lines to receive AC, one or more filter inductors electrically connected to at least one of the one or more AC lines, and an inductance control system operatively connected to the one or more filter inductors to modify the inductance of the one or more filter inductors. The conversion circuit is configured to convert the AC to DC and/or the DC to AC. The conversion circuit includes one or more switches configured to be controlled to convert the AC to DC or DC to AC. The inductance control system modifies the inductance of the one or more filter indictors to maintain a constant switching frequency while maintaining soft switching of the one or more switches independent of variations in the AC and/or a load connected to the conversion circuit.

Optionally, the inductance control system can further include a control module connected to the AC source to sense the AC. The control module can be configured to modify inductance of the one or more filter inductors based on the AC and/or the load.

Optionally, the inductance control system can further include at least one DC source connected to the control module and configured to be controlled by the control module to output a control DC. The inductance control system can further include one or more control lines electrically connected to the at least one DC source to receive the control DC. The inductance control system can further include one or more control inductors electrically connected to the DC source via the one or more control lines. The one or more control inductors can be coupled with the one or more filter inductors to apply a magnetic field to the one or more filter inductors to modify the inductance of the one or more filter inductors.

Optionally, the one or more filter inductors can include a core. The one or more control inductors can be configured to modify a magnetic permeability of the core thereby modifying the inductance of the one or more filter inductors.

Optionally, the control module can be configured to control the control DC to achieve a desired inductance of the one or more filter inductors as a function of amplitude and/or frequency of the AC. The control module can be configured to control the control DC to achieve a desired inductance of the one or more filter inductors in accordance with the following equation:

$$L = \frac{g(\sin(\omega t))}{f_s}$$

where $f_s$ is the switching frequency (e.g., the speed at which the switches are cycled), $g$ is the amplitude, $\omega$ is the angular frequency of the AC, $T$ is time, and $L$ is inductance of the one or more filter inductors. The switching frequency $f_s$ can be constant. The control module can be configured to modify the inductance of the one or more filter inductors to cause soft switching of the one or more switches at a constant switching frequency. The AC/DC converter can further include a switching controller configured to control the one or more switches at a constant switching frequency.

Optionally, the AC source can be a single phase. In certain other embodiments, the AC source can include a plurality of phases connected to a plurality of phase lines. Each of the plurality of phase lines can include at least one of the one or more filter inductors configured to be controlled by the inductance control system. The inductance of each filter inductor can be controlled independently of the other filter inductors. The inductance of each filter inductor can be controlled the same as the other filter inductors. The one or more filter inductors can be between the AC source and the conversion circuit.

According to a second aspect of the invention, there is provided a non-transitory computer readable medium including computer executable instructions configured to cause a computer to perform a method. The method includes modifying inductance of one or more filter inductors associated with a AC/DC conversion circuit to maintain a constant switching frequency while maintaining soft switching of one or more switches of the conversion circuit independent of variations in AC from an AC source and/or variations in a load connected to the conversion circuit.

The method can further include sensing the AC output by the AC source, wherein modifying inductance of the one or more filter inductors is based on the sensed AC.

In accordance with at least one aspect of this disclosure, a non-transitory computer readable medium can include computer executable instructions configured to cause a computer to perform a method. The method can include controlling inductance of an inductor in a conversion circuit. The method can include commanding one or more switches associated with a conversion circuit to maintain a constant switching frequency.

In accordance with at least one aspect of this disclosure, the DC/DC converter can include a direct current (DC) source configured to output DC, one or more DC lines electrically connected to the DC source to conduct the DC, a non-resonant DC/DC conversion circuit operatively electrically connected to the one or more DC lines to receive DC, one or more filter inductors electrically connected to at least one of the one or more DC lines, and an inductance control system operatively connected to the one or more filter inductors to modify the inductance of the one or more filter inductors to maintain a constant switching frequency while maintaining soft switching of the one or more switches independent of variations in the DC and/or a load connected to the non-resonant DC/DC conversion circuit. The non-resonant DC/DC conversion circuit can be configured for DC/DC conversion. The non-resonant DC/DC conversion circuit can include one or more switches configured to be controlled for DC/DC conversion.

These and other features of the embodiments of the subject disclosure will become more readily apparent to those skilled in the art from the following detailed description taken in conjunction with the drawings.

## BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:

Fig. 1 is a schematic view of an AC/DC or DC/AC converter, showing a single-phase architecture with a tunable filter inductor adopted at the alternating current (AC) side;

Fig. 2 is a graph showing varying filter inductance as a function of AC line-to-neutral voltage for the AC/DC or DC/AC converter of Fig. 1;

Fig. 3 is a schematic view of an AC/DC or DC/AC converter, showing a three phase architecture;

Fig. 4 is a graph showing varying filter inductance as a function of AC phase voltage one each phase line of the embodiment of Fig. 3;

Fig. 5 is a schematic view of a DC/DC buck converter, showing a two-level architecture;

Fig. 6 is a graph showing inductor current over time for the DC/DC buck converter of Fig. 5;

Fig. 7 is a schematic view of a DC/DC buck converter, showing a three-level architecture; and

Fig. 8 is s a graph showing inductor current over time for the DC/DC buck converter of Fig. 7.

## DETAILED DESCRIPTION

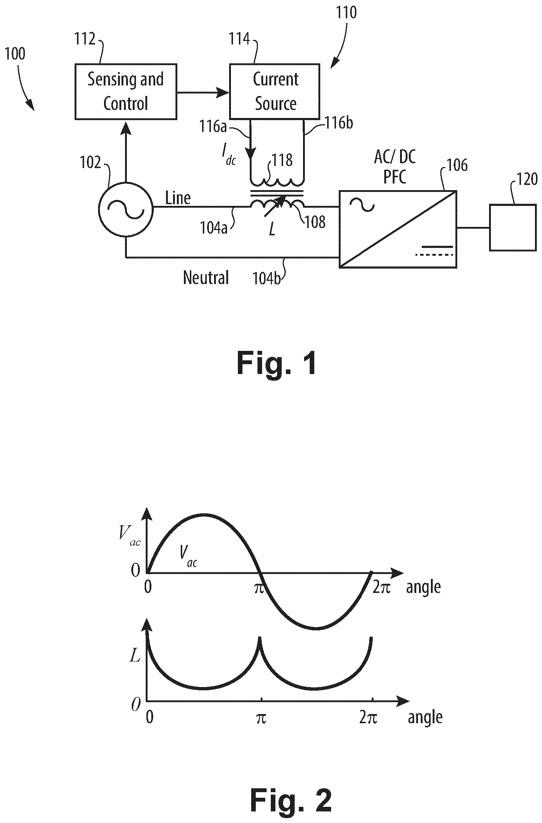

Reference will now be made to the drawings wherein like reference numerals identify similar structural features or aspects of the subject disclosure. For purposes of explanation and illustration, and not limitation, an illustrative view of an embodiment of an AC/DC converter in accordance with the disclosure is shown in Fig. 1 and is designated generally by reference character 100. Other embodiments and/or aspects of this disclosure are shown in Figs. 2-5.

With reference to Fig. 1, an AC/DC converter 100 can include an alternating current (AC) source 102 configured to output AC, one or more AC lines 104a-104b electrically connected to the AC source 102 to conduct the AC, and a conversion circuit 106 operatively electrically connected to the one or more AC lines 104a-104b to receive AC. As used herein, the terms AC/DC, DC/AC, and DC/DC can include any suitable directionality (e.g., unidirectional as stated, or bidirectional, e.g., such that AC/DC can convert AC to DC and DC to AC, for example). The AC/DC converter 100 can include one or more filter inductors 108 electrically connected to at least one of the one or more AC lines 104a-104b, and an inductance control system 110 operatively connected to the one or more filter inductors 108 to modify the inductance of the one or more filter inductors 108. The conversion circuit 106 can be configured to convert the AC to DC and/or the DC to AC.

The conversion circuit 106 can include one or more switches (not shown) configured to be controlled to convert the AC to DC or DC to AC. The inductance control system 110 can modify the inductance of the one or more filter inductors 108 to maintain a constant switching frequency while maintaining soft switching of the one or more switches independent of variations in the AC and/or a load (not shown) connected to the conversion circuit 106.

In certain embodiments, the inductance control system can further include a control module 112 connected to the AC source 102 to sense the AC. The control module 112 can be configured to modify inductance of the one or more filter inductors 108 based on the AC and/or the load.

In certain embodiments, the inductance control system 110 can further include at least one DC source 114 connected to the control module 112 and configured to be controlled by the control module 112 to output a control DC. The inductance control system 110 can further include one or more control lines 116a-116b electrically connected to the at least one DC source 114 to receive the control DC. The inductance control system 110 can further include one or more control inductors 118 electrically connected to the DC source 114 via the one or more control lines 116a-116b. The one or more control inductors 118 can be magnetically coupled with the one or more filter inductors 108 to apply a magnetic field to the one or more filter inductors to modify the inductance of the one or more filter inductors 108.

In certain embodiments, the one or more filter inductors 108 can include a core (not shown) (e.g., the core made of a ferromagnetic material). The one or more control inductors 118 can be configured (e.g., suitably positioned relative to the core) to modify a magnetic permeability of the core thereby modifying the inductance of the one or more filter inductors 108.

In certain embodiments, the control module 112 can be configured to control the control DC (e.g., by controlling the DC current source 114) to shift the DC bias of the magnetic field, change the permeability and achieve a desired inductance of the one or more filter inductors 108 as a function of amplitude and/or frequency of the AC source 102. One having ordinary skill in the art in view of this disclosure knows how to relate the control DC to the inductance of the one or more filter inductors 108, e.g., based on the physical relationship with the one or more control inductors 118, without undue experimentation. The control module 112 can be configured to control the control DC to achieve a desired inductance of the one or more filter inductors 108 in accordance with the following equation:

$$L = \frac{g(\sin(\omega t))}{f_s}$$

where $L$ is inductance of the one or more filter inductors, $f_s$ is the switching frequency, and g is a function of the DC voltage, power, and the AC voltage which itself is a sinusoidal expression of the AC angular frequency $\omega$ and time t. The control module 112 can be configured to modify the inductance of the one or more filter inductors 108 to enable soft switching of the one or more switches (of the conversion circuit 106) at a constant switching frequency $f_s$. The AC/DC converter 100 can further include a switching controller 120 configured to control the one or more switches at a constant switching frequency.

In certain embodiments, the AC source 102 can be a single phase (e.g., as shown in Fig. 1). With additional reference to Fig. 2, a graph is shown representing an embodiment of control of inductance of the one or more filter inductors as a function g of AC line-neutral voltage (e.g., along the one or more AC lines) over time, e.g., for the single-phase AC/DC converter 100 of Fig. 1.

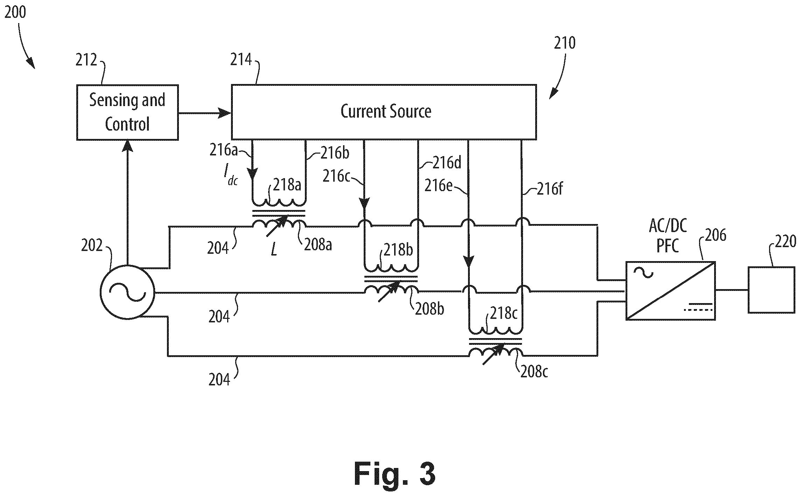

With references to Fig. 3, another embodiment of an AC/DC converter 200 is shown. The AC source 202 can include a plurality of phases (e.g., three phases as shown) connected to a plurality of phase lines 204a-204c. Each of the plurality of phase lines 204a-204c can include at least one of the one or more filter inductors 208a-208c configured to be controlled by the inductance control system 210. The inductance of each filter inductor 208a-208c can be controlled independently of the other filter inductors 208a-208c (e.g., one controller with the ability to process an output at each phase). The inductance of each filter inductor 208a-208c can be controlled the same as the other filter inductors 208a-208c (e.g., one controller with one output that is the same for all phases). The one or more filter inductors 208a-208c can be between the AC source 202 and the conversion circuit 206. The inductance control system 210 of AC/DC converter 200 includes all aspects of the inductances control system 110 of AC/DC converter 100 as described above. For example, inductance control system 210 can include control lines 216a-216f, DC source 214, control module 212, and control inductors 218a-218c as described above with respect to control lines 116, control module 112, and control inductor 118. Further AC/DC converter 200 includes switching controller 220 as described above with respect to switching controller 120.

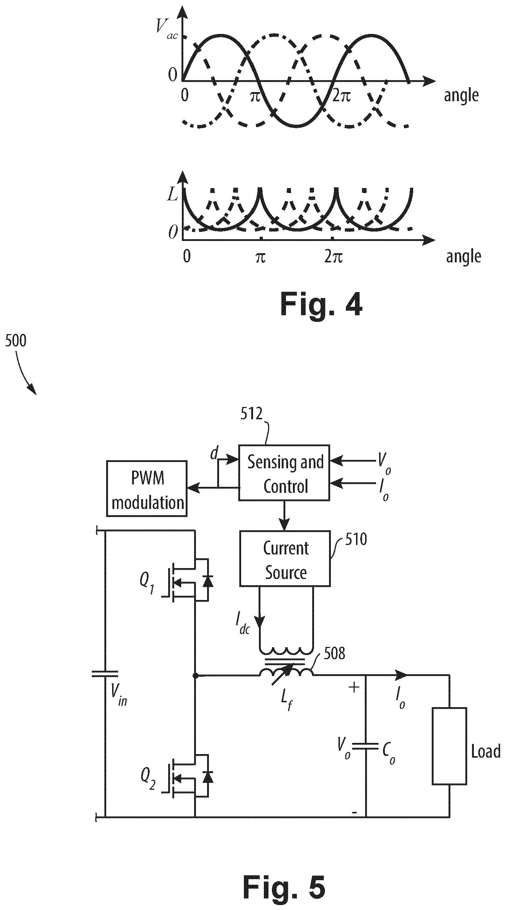

With references to Fig. 4, a graph is shown representing an embodiment of the control of inductance of the one or more filter inductors as a function of AC line-neutral voltage (e.g., along the one or more AC lines) over time, e.g., for the three phase AC/DC converter of Fig. 3.

With reference to Fig. 5, certain embodiments of an electrical converter system can include non-resonant type DC/DC converter 500 having a DC source, for example. As shown, the converter 500 of Fig. 5 is a two-level half bridge buck converter, which is a non-resonant circuit. The converter 500 can include a plurality of controllable switches (e.g., MOSFETs, etc.). The converter 500 can include an inductance control system 510 configured to control inductance of a buck output inductor 508. The inductance control system 510 can include a control module 512 configured to modify inductance of the filter inductor 508 based on the DC output voltage $V_o$, duty cycle d and the load current $I_o$ in accordance with the following equation:

$$L = \frac{1}{2f_s} \frac{V_o(1-d)}{(I_o + I_{zvs})}$$

Where L is the buck inductor, $f_s$ is the switching frequency, Izvs is a small negative current of the buck inductor at the end of a switching cycle that achieves the soft-switching (e.g., the zero voltage switching (ZVS)) for the upper switch Q1. In certain embodiments, Q2 can inherently achieve ZVS in the half bridge buck converter, contrary to the conventional control scheme where the switching frequency is varied according to the variations of the input voltage and load voltage and current to achieve ZVS. The control module 512 is configured to sense variations in DC current or voltage as a result of source variations or load variations and to modify the inductance of the buck inductor 508, e.g., to maintain soft switching at a constant switching frequency.

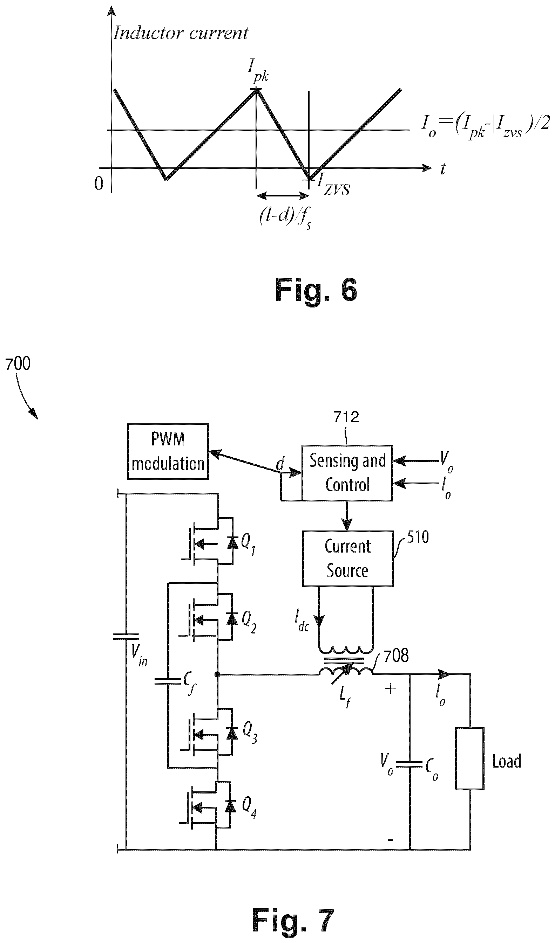

Fig. 6 illustrates how the soft switching is achieved in the control scheme of Fig. 5, deriving the above formula. Through the control scheme of Fig. 5, the buck inductor can be discharged linearly during the Q2 conduction interval to allow it to reach certain small negative level Izvs. Such negative current can help remove the junction charge of the upper switch Q1 and achieve the soft-switching. In conventional schemes, the switching frequency is varied based on the variations of the input voltage, load voltage, and current to achieve the Izvs, whereas in the proposed scheme, the inductance of the buck inductor can vary according to the system variations to achieve the similar Izvs while maintaining the fixed switching frequency.

With reference to Fig. 7, certain embodiments of an electrical converter system can include DC/DC converter 700 having a DC source, for example. As shown, the converter 700 of Fig. 7 is a three-level half bridge buck converter, which is a non-resonant circuit. The converter 700 can include a plurality of controllable switches (e.g., MOSFETs, etc.). The converter 700 can include an inductance control system 710 configured to control inductance of a buck output inductor 708. The inductance control system 710 can include a control module 712 configured to modify inductance of the filter inductor 708 based on the DC output voltage $V_o$, duty cycle d and the load current $I_o$ in accordance with the following equation:

$$ L = \frac{1}{2f_s} \frac{V_o(0.5 - d)}{(I_o + I_{zvs})} $$

Where L is the buck inductor, $f_s$ is the switching frequency, Izvs is a small negative current of the buck inductor at the end of a switching cycle that helps to achieve the soft switching (e.g., the zero voltage switching (ZVS)) for the switch Q1 and Q3). In certain embodiments, Q2 and Q4 can inherently achieve ZVS in the three-level half bridge buck converter.

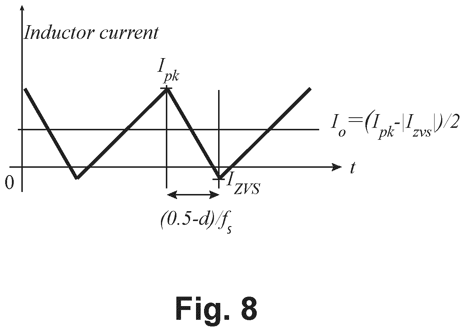

Fig. 8 illustrates the key current waveform and modulation scheme for this three-level half bridge buck converter. The scheme is very similar to the two-level case in Fig. 6. Other similar three-level DC/DC converter embodiments could follow the same concept.

In accordance with at least one aspect of this disclosure, a non-transitory computer readable medium can include computer executable instructions configured to cause a computer to perform a method. The method can include modifying inductance of one or more filter inductors associated with a AC/DC and non-resonant DC/DC conversion circuit to maintain a constant switching frequency while maintaining soft switching of one or more switches of the conversion circuit. The switching frequency is now independent of variations in AC or DC from an AC or DC source and/or variations in a load connected to the conversion circuit. The method can further include sensing the AC or DC output or source. Modifying inductance of the one or more filter inductors can be based on the sensed signals.

In accordance with at least one aspect of this disclosure, a non-transitory computer readable medium can include computer executable instructions configured to cause a computer to perform a method. The method can include commanding one or more switches associated with a conversion circuit to maintain a constant switching frequency.

Traditionally, passive components of converters, for example, inductors, capacitors, etc. are fixed in value. In order to achieve soft switching (e.g., switching under low or no current/voltage) to account for variable voltage/current on the switches from changing inputs, load, etc., the switching frequency of switches in the converters had to be modified. Certain embodiments can instead modify the inductance of a passive inductor component to account for variable voltage/current on the switches from changing inputs, load, etc.

In certain embodiments, the soft-switching control through control of passive filter inductors allows for much more freedom for circuit implementation and controller design and enables flexible and wider operation range. This will also improve the converter efficiency and size reduction since all components especially the passives only need to suffer fixed switching frequency ripples hence provides the base for optimized design in terms of core material selection, core loss and winding loss under different modes of operations and system input/output variations. It also greatly reduces the complexity and challenges for paralleling the power converters for higher power applications, since all converter modules are now sharing the same and constant switching frequency and synchronization among them becomes much easier. Certain embodiments can be applied to commonly used single phase PFC circuits such as boost PFC, totem-pole PFC, and flyback PFC, and can be extended to three-phase two-level or multilevel rectifiers and inverters. Other Certain embodiments can be applied to commonly used DC/DC converters such as simple buck or boost converters, two-level half bridge or full bridge buck, three-level half bridge or full bridge buck, and other buck or boost converter variants.

Embodiments can include any suitable computer hardware and/or software module(s) to perform any suitable function (e.g., as disclosed herein). Any suitable method(s) or portion(s) thereof disclosed herein can be performed on and/or by any suitable hardware and/or software module(s).

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, microcode, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the invention as set out in the appended claims.

**Claims**

1. An AC/DC converter (100, 200), comprising:

   an alternating current (AC) source (102, 202) configured to output AC;
   one or more AC lines (104a-104b, 204a-204c) electrically connected to the AC source to conduct the AC;
   a conversion circuit (106, 206) operatively electrically connected to the one or more AC lines to receive AC, wherein the conversion circuit is configured to convert the AC to DC and/or the DC to AC, wherein the conversion circuit includes one or more switches configured to be controlled to convert the AC to DC or DC to AC;
   one or more filter inductors (108, 208a-208c) electrically connected to at least one of the one or more AC lines; and
   an inductance control system (110, 210) operatively connected to the one or more filter inductors to modify the inductance of the one or more filter inductors to maintain a constant switching frequency while maintaining soft switching of the one or more switches independent of variations in the AC and/or a load connected to the conversion circuit.

2. The AC/DC converter of claim 1, wherein the inductance control system further includes a control module (112, 212) connected to the AC source to sense the AC.

3. The AC/DC converter of claim 2, wherein the control module is configured to modify inductance of the one or more filter inductors based on the AC and/or the load.

4. The AC/DC converter of claim 3, wherein the inductance control system further includes at least one DC source (114, 214) connected to the control module and configured to be controlled by the control module to output a control DC.

5. The AC/DC converter of claim 4, wherein the inductance control system further includes one or more control lines (116a-116b, 216a-216f) electrically connected to the at least one DC source to receive the control DC.

6. The AC/DC converter of claim 5, wherein the inductance control system further includes one or more control inductors (118, 218a-218c) electrically connected to the DC source via the one or more control lines, wherein the one or more control inductors are coupled with the one or more filter inductors to apply a magnetic field to the one or more filter inductors to modify the inductance of the one or more filter inductors; and, optionally,

wherein the one or more filter inductors includes a core, wherein the one or more control inductors are configured to modify a magnetic permeability of the core thereby modifying the inductance of the one or more filter inductors.

7. The AC/DC converter of any preceding claim, wherein the control module is configured to control the control DC to achieve a desired inductance of the one or more filter inductors as a function of amplitude and/or frequency of the AC.

8. The AC/DC converter of claim 7, wherein the control module is configured to control the control DC to achieve a desired inductance of the one or more filter inductors in accordance with the following equation:

$$L = \frac{g(\sin(\omega t))}{f_s}$$

where $L$ is inductance of the one or more filter inductors, $f_s$ is the switching frequency, and g is a function of the DC voltage, power, and the AC voltage which itself is a sinusoidal expression of the AC angular frequency $\omega$ and time t, wherein switching frequency $f_s$ is constant.

9. The AC/DC converter of claim 8, wherein the control module is configured to modify the inductance of the one or more filter inductors to cause soft switching of the one or more switches at a constant switching frequency; and, optionally,

further comprising a switching controller (120, 220) configured to control the one or more switches at a constant switching frequency.

10. The AC/DC converter of any preceding claim, wherein the AC source is a single phase; or

wherein the AC source includes a plurality of phases connected to a plurality of phase lines (204a-204c), wherein each of the plurality of phase lines include at least one of the one or more filter inductors configured to be controlled by the inductance control system.

11. The AC/DC converter of any preceding claim, wherein the inductance of each filter inductor is controlled independently of the other filter inductors; or

wherein the inductance of each filter inductor is controlled the same as the other filter inductors.

12. The AC/DC converter of any preceding claim, wherein the one or more filter inductors are between the AC source and the conversion circuit.

13. A non-transitory computer readable medium comprising computer executable instructions configured to cause a computer to perform a method, the method comprising:

modifying inductance of one or more filter inductors (108, 208a-208c, 508, 708) associated with an AC/DC conversion circuit (106, 206) or non-resonant DC/DC conversion circuit to maintain a constant switching frequency while maintaining soft switching of one or more switches of the conversion circuit independent of variations in AC from an AC source (102, 202) and/or variations in a load connected to the conversion circuit.

14. The computer readable medium of claim 13, wherein the method further comprises sensing the AC output by the AC source, wherein modifying inductance of the one or more filter inductors is based on the sensed AC.

15. A DC/DC converter (500, 700), comprising:

a direct current (DC) source configured to output DC;
one or more DC lines electrically connected to the DC source to conduct the DC;
a non-resonant DC/DC conversion circuit operatively electrically connected to the one or more DC lines to receive DC, wherein the non-resonant DC/DC conversion circuit is configured for DC/DC conversion, wherein the non-resonant DC/DC conversion circuit includes one or more switches configured to be controlled for DC/DC conversion;
one or more filter inductors (508, 708) electrically connected to at least one of the one or more DC lines; and
an inductance control system (510, 710) operatively connected to the one or more filter inductors to modify the inductance of the one or more filter inductors to maintain a constant switching frequency while maintaining soft switching of the one or more switches independent of variations in the DC and/or a load connected to the non-resonant DC/DC conversion circuit.

**Fig. 1**

**Fig. 2**

Fig. 3

Fig. 4

Fig. 5

**Fig. 6**

**Fig. 7**

**Fig. 8**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 612 030 A (YANCHENG INST TECH) 19 January 2018 (2018-01-19) | 1-7, 10-14 | INV. H02M1/00 |
| A | * figures 1,2 * <br> * figure 10 * <br> * paragraph [0002] * <br> * paragraph [0026] - paragraph [0029] * <br> * paragraph [0053] - paragraph [0057] * <br> - - - - - | 8,9,15 | H02M3/158 H02M7/217 |
| X | HE QINGQING ET AL: "A Variable Inductor Controlled Single-Stage AC/DC Converter for Modular Multi-Channel LED Driver", IEEE TRANSACTIONS ON ENERGY CONVERSION, IEEE SERVICE CENTER, PISCATAWAY, NJ, US, vol. 36, no. 4, 11 March 2021 (2021-03-11) , pages 2912-2923, XP011890643, ISSN: 0885-8969, DOI: 10.1109/TEC.2021.3065444 [retrieved on 2021-11-29] | 1,7-9 | |
| A | * figure 1 * <br> * page 2913 * <br> * page 2917 * <br> - - - - - | 2-6, 10-15 | **TECHNICAL FIELDS SEARCHED (IPC)** |
| X | KR 101 831 371 B1 (ZENTR MIKROELEKT DRESDEN GMBH [DE]) 22 February 2018 (2018-02-22) | 15 | H02M |
| A | * figure 1 * <br> * paragraph [0003] * <br> * paragraph [0021] - paragraph [0022] * <br> - - - - - | 1-14 | |
| A | CN 111 342 668 B (UNIV SOUTHWEST JIAOTONG) 6 July 2021 (2021-07-06) * figure 1 * * figures 3-4 * <br> - - - - - | 1-15 | |

-/--

The present search report has been drawn up for all claims

| Place of search | Date of completion of the search | Examiner |
|---|---|---|
| The Hague | 28 January 2025 | Riehl, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 20 5693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WEI YUQI ET AL: "Analysis and design of the DCM operation boost PFC converter with magnetic control", IET POWER ELECTRONICS, IET, UK, vol. 12, no. 14, 27 November 2019 (2019-11-27), pages 3697-3706, XP006086430, ISSN: 1755-4535, DOI: 10.1049/IET-PEL.2019.0437 * figure 1 * * figures 7-9 * * page 2 - page 4 * | 1-15 | |
| A | CN 112 217 387 A (UNIV NANJING SCI & TECH) 12 January 2021 (2021-01-12) * figure 9 * | 1-15 | |
| | | | TECHNICAL FIELDS SEARCHED (IPC) |

The present search report has been drawn up for all claims

| Place of search | Date of completion of the search | Examiner |
|---|---|---|
| The Hague | 28 January 2025 | Riehl, Philippe |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

page 2 of 2

## ANNEX TO THE EUROPEAN SEARCH REPORT
## ON EUROPEAN PATENT APPLICATION NO.

EP 24 20 5693

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2025

| Patent document cited in search report | | Publication date | Patent family member(s) | | Publication date |
|---|---|---|---|---|---|
| CN 107612030 | A | 19-01-2018 | NONE | | |
| KR 101831371 | B1 | 22-02-2018 | EP | 2987233 A1 | 24-02-2016 |
| | | | KR | 20150143759 A | 23-12-2015 |
| | | | TW | 201505345 A | 01-02-2015 |
| | | | US | 2016065068 A1 | 03-03-2016 |
| | | | WO | 2014170409 A1 | 23-10-2014 |
| CN 111342668 | B | 06-07-2021 | NONE | | |
| CN 112217387 | A | 12-01-2021 | NONE | | |

EPO FORM P0459

For more details about this annex : see Official Journal of the European Patent Office, No. 12/82